# EUROPÄISCHE PATENTSCHRIFT

(11) **EP 0 473 967 B1**
(45) Veröffentlichungstag und Bekanntmachung des Hinweises auf die Patenterteilung: **26.10.1994**
(21) Anmeldenummer: 91113426.0
(22) Anmeldetag: 09.08.1991
(51) Int. Cl.: H01G 9/00, H01G 9/04

(54) **Hochvolt-Wickel-Aluminium-Elektrolytkondensator für hohe Wechselstrombelastbarkeit**
High voltage wound aluminium electrolytic capacitor with high alternative current loading capacity
Condensateur électrolytique enroulé à l'aluminium à haut voltage suspeptible de supporter une haute tension alternative

(30) Priorität: 05.09.1990 DE 4028177
(43) Veröffentlichungstag der Anmeldung: 11.03.1992
(73) Patentinhaber: SIEMENS AKTIENGESELLSCHAFT, 80333 München (DE)
(72) Erfinder: Schweikert, Wilhelm, W-7920 Heidenheim (DE); Will, Norbert, W-7920 Heidenheim (DE)

(56) Entgegenhaltungen:
- EP-A- 0 214 788
- US-A- 4 546 415

## Beschreibung

Die Erfindung betrifft einen Hochvolt-Wickel-Aluminiumelektrolytkondensator nach dem Oberbegriff des Patentanspruchs 1.

Aluminiumelektrolytkondensatoren bestehen im allgemeinen aus einer Anodenfolie aus Aluminium, die mit einer dielektrisch wirksamen Oxidschicht versehen ist. Die Kathode des Kondensators wird durch den Betriebselektrolyt gebildet, der meistens in saugfähigen Isolierfolien, z.B. aus Papier, gespeichert ist. Als Kathodenzuführung dient eine weitere Aluminiumfolie, die Kathodenfolie.

Bei Belastung eines derartigen Kondensators mit Wechselstrom entsteht im Kondensatorwickel Verlustwärme, die über das Gehäuse an die Umgebung abgegeben wird. Die Wärme führt zu einer Überhitzung des Kondensatorwickels und damit zu einer starken Verringerung der Brauchbarkeitsdauer.

Es sind bereits eine Reihe von Maßnahmen vorgeschlagen worden, um die entstehende Verlustwärme abzuführen, wozu beispielsweise auf das "Siemens-Datenbuch 1989/90, Aluminium- und Tantalelektrolytkondensatoren" verwiesen wird; dort ist auf den Seiten 31 bis 36 im Kapitel 5.5 "Wechselstrombelastung" auf die entsprechenden Zusammenhänge hingewiesen. Weiterhin ist aus der US-A-4 546 415 ein Kondensator der eingangs genannten Art bekannt.

Auch wenn die bekannten Maßnahmen eine bessere Ableitung der entstehenden Verlustwärme gewährleisten, ist es doch wünschenswert, die entstehenden Übertemperaturen weiter abzusenken.

Die der vorliegenden Erfindung zugrundeliegende Aufgabe besteht darin, einen Hochvolt-Wickel-Aluminiumelektrolytkondensator anzugeben, der eine gegenüber dem Stand der Technik verringerte Wärmeentwicklung bzw. bessere Wärmeabführung besitzt.

Diese Aufgabe wird erfindungsgemäß durch ein Hochvolt-Wickel-Aluminiumelektrolytkondensator gelöst, der die im Patentanspruch 1 aufgeführten Merkmale aufweist:

Hiermit werden folgende Eigenschaften erreicht:

### Zu Merkmal a:

1) Der Ersatzserienwiderstand (ESR) im Arbeitsbereich für Umrichter (f > 600 Hz, T > 60° C) wird durch eine erhöhte Anzahl von Anschlußstreifen gesenkt. Beispielsweise wird der ESR halbiert, wenn statt der üblichen maximal drei Paar Anschlußstreifen sieben Bändchenpaare verwendet werden.
2) Die an den Anschlußstreifen punktuell hohe Übertemperatur wird bei sieben Bändchenpaaren auf 20% abgesenkt (weniger Wärmeerzeugung und bessere Wärmeableitung). Dies gilt beispielsweise für eine Bändchenbreite von 7mm. Bei breiteren Bändchen, z.B. 10mm erfolgt eine Absenkung der Übertemperatur auf 10%.
3) Die durch die Anschlußstreifen bedingte Induktivität wird abgesenkt.

### Zu Merkmal b:

Der thermische Widerstand längs des Wickels wird abgesenkt, wobei eine 50µm dicke Kathodenfolie anstatt einer 20µm dicken Folie gewählt wurde.

### Zu Merkmal c:

1) Der thermische Widerstand längs des Wickels zum Becherboden wird abgesenkt.
2) Die Elastizität der zum Becherboden überstehenden Kathodenfolie wird erhöht und damit der thermische Übergangswiderstand Wickel-Becher stark abgesenkt.

### Zu Merkmal d:

1) Durch den kleineren Luftspalt entsteht eine nennenswerte Wärmebrücke zwischen Wickelmantel und Bechermantel.
2) Durch den großen Wickeldurchmesser wird der thermische Widerstand längs des Wickels zum Becherboden abgesenkt.
3) Durch den großen Wickeldurchmesser wird die Stranglänge erhöht und damit der ESR abgesenkt.

Durch die geschilderten Maßnahmen wird somit der thermische Widerstand zwischen Wickel und elektrischen Anschlüssen minimiert. Damit eröffnet sich ein neuer Weg zur Wärmeableitung vom Wickel zur Umgebung. Wird diese Kühlmöglichkeit nicht genutzt, so kann umgekehrt die an den Anschlüssen (Kontaktwiderstand) entstehende Wärme gut über den Wickel zum Becher abgeführt werden, ohne daß an den Kontakten eine Überhitzung auftritt.

Überraschend beim Gegenstand der Erfindung ist es, daß durch die Kombination der beanspruchten Merkmale nicht nur eine Aggregation einzelner Maßnahmen erfolgt, sondern daß sich die genannten Merkmale derart gegenseitig beeinflußen, daß von einer multiplikativen Auswirkung gesprochen werden kann.

Zur Verdeutlichung des Erfindungsgegenstandes wurden sowohl herkömmliche Elektrolytkondensatoren als auch Elektrolytkondensatoren nach der Erfindung mit einem Wechselstrom beaufschlagt (I ∼ = 100 A/20kHz) und die Temperaturen in der Wickelachse sowie an der Gehäuseoberfläche ermittelt.

Es handelte sich um Kondensatoren der Nenndaten 350 V/3600µF mit den Gehäuseabmessungen 75mm Durchmesser und 145mm Länge. Das Gehäuse wurde im Luftstrom von 27° C gekühlt.

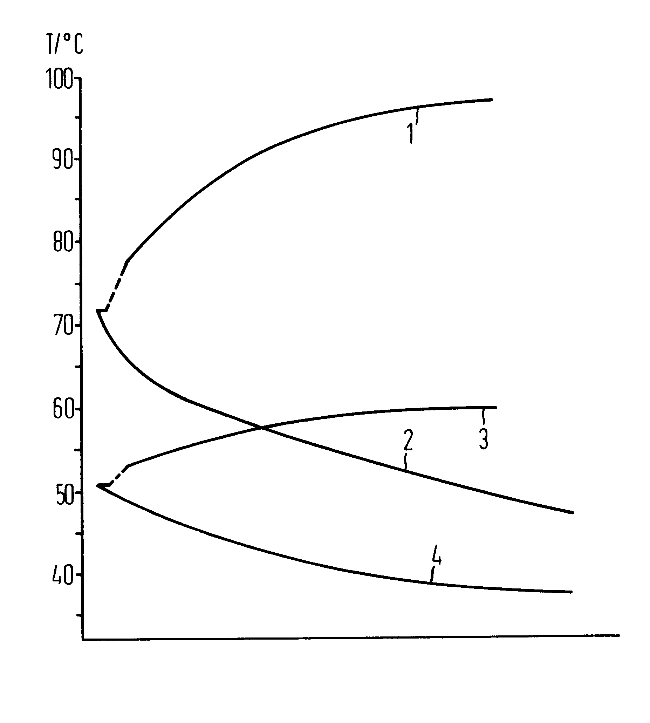

In der Zeichnung sind die Temperaturen dargestellt, wobei links in der Zeichnung der Becherboden und rechts die Abschlußscheibe angeführt ist.

Die Kurven 1 und 2 beziehen sich auf herkömmliche Elektrolytkondensatoren, während die Kurven 3 und 4 an Kondensatoren nach der Erfindung bestimmt sind. Dabei geben die Kurven 1 und 3 die Temperaturen in der Wickelachse und die Kurven 2 und 4 die Temperaturen der Gehäuseoberfläche wieder.

Durch die erfindungsgemäßen Maßnahmen erreicht die Temperatur in der Wickelachse nur noch circa 60° C, während sie bei herkömmlichen Elektrolytkondensatoren über 95° C ansteigt. Auch die Temperatur der Gehäuseoberfläche ist bei den Kondensatoren nach der Erfindung niedriger als bei den herkömmlichen.

## Patentansprüche

1. Hochvolt-Wickel-Aluminiumelektrolytkondensator für hohe Wechselstrombelastbarkeit mit einer Anoden- und Kathodenfolie, der in ein metallisches Gehäuse, insbesondere aus Aluminium derart eingebaut ist, daß die Kathodenfolie in metallischem Kontakt zum Becherboden steht,
**dadurch gekennzeichnet**, daß
er zur Verringerung der Wärmeentstehung folgende Merkmale aufweist:
a) Er besitzt jeweils sieben Bändchen als Anschlußstreifen zwischen Anoden- bzw. Kathodenfolie und äußeren Kontaktelementen;
b) die Kathodenfolie besitzt eine Dicke von 50 µm;
c) als Kathodenfolie dient eine Niedervolt-Anodenfolie;
d) der Durchmesser des Kondensatorwickels wird derart ausgewählt, daß zwischen Wickel und Gehäuse nur ein Luftspalt < 2 mm verbleibt

2. Kondensator nach Anspruch 1,
**dadurch gekennzeichnet**, daß
die Breite der Anschlußstreifen 7 oder 10 mm beträgt.

## Claims

1. High voltage wound aluminium electrolytic capacitor for high alternating current loading capacity, which has an anode foil and a cathode foil and is installed in a metallic container, in particular made from aluminium, in such a way that the cathode foil is in metallic contact with the can base, characterized in that in order to reduce the production of heat it has the following features:
a) it has respectively seven small bands as connecting strips between the anode foil or cathode foil and external contact elements;
b) the cathode foil has a thickness of 50 µm;
c) a low voltage anode foil serves as the cathode foil;
d) the diameter of the capacitor element is selected in such a way that only an air gap < 2 mm remains between the element and the container.

2. Capacitor according to Claim 1, characterized in that the width of the connecting strips is 7 or 10 mm.

## Revendications

1. Condensateur électrolytique enroulé en aluminium à haute tension susceptible de supporter de grandes intensités de courant alternatif, comportant une feuille d'anode et une feuille de cathode, qui sont insérées dans un boîtier métallique, notamment en aluminium, de telle sorte que la feuille de cathode est en contact métallique avec le fond du boîtier, caractérisé en ce que pour réduire le dégagement de chaleur, il a les caractéristiques suivantes :
a) il comporte respectivement sept petites bandes réalisées sous la forme de bandes de raccordement entre la feuille d'anode ou la feuille de cathode et des éléments extérieurs de contact;
b) la feuille de cathode a une épaisseur de 50 µm;
c) comme feuille de cathode, on utilise une feuille d'anode basse tension;
d) le diamètre de l'enroulement du condensateur est choisi de manière que seul un entrefer <2 mm subsiste entre l'enroulement et le boîtier.

2. Condensateur suivant la revendication 1, caractérisé en ce que la largeur des bandes de raccordement est égale à 7 ou à 10 mm.
